# EUROPEAN PATENT APPLICATION

(11) **EP 4 553 226 A1**
(43) Date of publication of application: **14.05.2025**
(21) Application number: 22949831.6
(22) Date of filing: 07.07.2022
(51) Int. Cl.: D21J 5/00

(54) **PAPER-PLASTIC PRODUCT FORMING APPARATUS**

(71) Applicant: Changzhou City Cheng Xin Environmental Protection Technology Co., Ltd., Changzhou City, Jiangsu Province 213311 (CN)
(72) Inventor: LAI, Tzung-Shen, Liyang, Jiangsu 213300 (CN); RAO, Ri Hua, Liyang, Jiangsu 213300 (CN)
(74) Representative: Lang, Christian
(86) International application number: PCT/CN2022/104343
(87) International publication number: WO 2024/007246

(57) **Abstract**

A paper-plastic product forming apparatus. A left hot-pressing upper die and a right hot-pressing upper die are provided on a left side and a right side of a longitudinal center line of a position where a pulp suction die is located, and are mechanisms capable of independently moving left and right instead of being linkage mechanisms. In a standby state in which a die closing operation when the left hot-pressing upper die or the right hot-pressing upper die is correspondingly arranged above the pulp suction die is not activated, there is a space between the left hot-pressing upper die and the right hot-pressing upper die. The space is large enough to accommodate the left hot-pressing upper die and the right hot-pressing upper die. The apparatus can accelerate dehydration of paper blank products, shorten drying time, and reduce energy consumption and the production cost.

## Description

### TECHNICAL FIELD

The present invention relates to a paper-plastic product forming apparatus, and more particularly to the paper-plastic product forming apparatus which is capable of accelerating a dehydration of the paper blank and reducing a drying time, an energy consumption and a production cost.

### BACKGROUND

As the demand for paper-plastic (plant fiber) products increases, the energy consumption and time costs generated by larger quantities of production are higher. In order to reduce costs, manufacturers and researchers in the paper-plastic industry are all striving to develop better processes, methods or apparatus. Currently, the most common cost-saving methods include formulating pulp raw materials, reducing transfer time, and increasing water absorption. The most commonly used method in the industry is to increase cold extrusion stations to save energy costs.

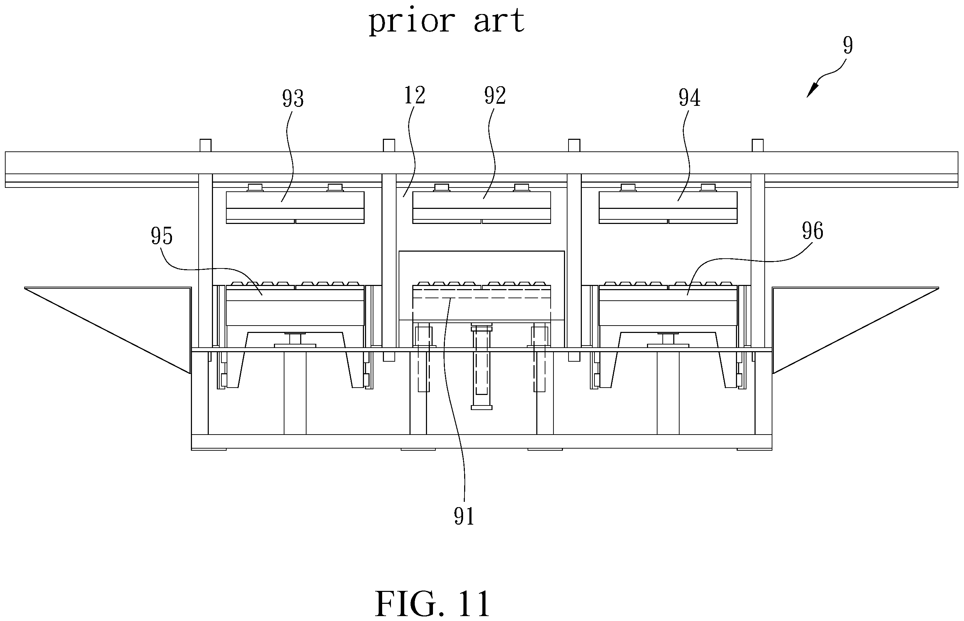

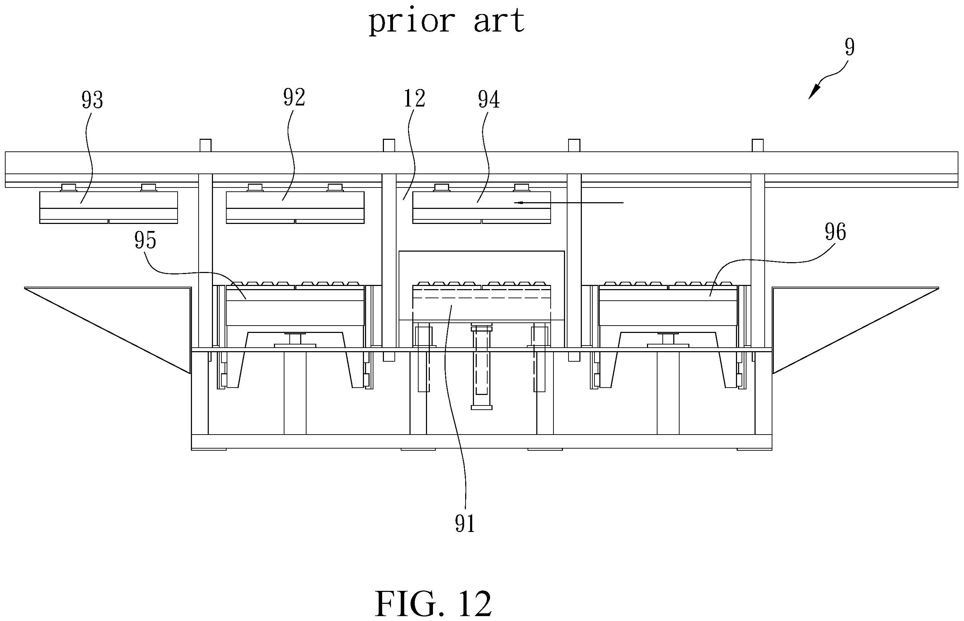

Referring to FIGS. 11 and 12, a conventional paper-plastic product forming apparatus 9 with a cold extrusion function contains: a pulp suction die 91, a cold extrusion die 92, two hot-pressing upper dies 93, 94, and two hot-pressing lower dies 95, 96. The cold extrusion die 92 and the two hot-pressing upper dies 93, 94 are a linkage mechanism, and their operating steps include: sucking a wet blank in a pulp tank by using the pulp suction die 91, moving the pulp suction die 91 upward to clamp with the cold extrusion die 92, wherein the cold extrusion die 92 is not heated and has a normal temperature and a vacuum sucker and is configured to clamp the wet blank so as to extrude excess waters from the wet blank, thus forming a paper pulp. Then, the vacuum sucker of the pulp suction die 91 sucks the extruded waters of the wet blank, and the vacuum sucker of the cold extrusion die 92 is turned on to suck the paper blank. Thereafter, the cold extrusion die 92 is moved to correspond to the hot-pressing lower die 95, wherein the hot-pressing lower die 95 has a base on which a heater and a vacuum mechanism are disposed. When the hot-pressing lower die 95 is lifted to clamp with the cold extrusion die 92, the vacuum mechanism of the hot-pressing lower die 95 is turned on to suck the paper blank to be away from the cold extrusion die 92, then the cold extrusion die 92 is moved back to locate above the pulp suction die 91 and to be about to have a cold extruding process and a shifting process. Thereafter, the hot-pressing upper die 93 and the hot-pressing lower die 95 are clamped together and their heaters are turned on to dry and form the paper blank, thus producing a finished product. Thereby, a sole paper-plastic product forming apparatus is configured to produce the finished product. In another embodiment, two paper-plastic product forming apparatuses are mounted on a machine, wherein two hot-pressing upper dies 93, 94 are fixed on two sides of the cold extrusion die 92, and the cold extrusion die 92 and the two hot-pressing upper dies 93, 94 are a linkage mechanism, wherein two hot-pressing dies 95, 96 are disposed on two sides of the pulp suction die 91 below the machine. After sucking the paper blank, the cold extrusion die 92 is moved to locate above the hot-pressing lower die 96, thereafter the conventional paper-plastic product forming apparatus 9 operates as above-mentioned description, thus forming the paper-plastic product successively.

However, the conventional paper-plastic product forming apparatus has defects as follows:
1) The cold extrusion die 92 and the two hot-pressing upper dies 93, 94 are driven to operate simultaneously, so a space has to be defined on the machine to accommodate one of the two hot-pressing upper die 93, 94, when the cold extrusion die 92 delivers the paper blank to one of the two hot-pressing dies 95, 96. Accordingly, two spaces have to be defined when two conventional paper-plastic product forming apparatus are arranged on two sides of the machine, thus increasing a production cost and a occupied space.
2) After clamping the cold extrusion die 92 with the pulp suction die 91, the cold extrusion die 92 delivers the paper blank to one hot-pressing lower die 95 and then is moved back to locate above the pulp suction die 91, in other words, one of the two hot-pressing upper dies 93, 94 is moved with the cold extrusion die 92 to locate above the two hot-pressing lower dies 95, 96, thus increasing a production time.
3) The cold extrusion die 92 is configured to suck the paper blank by using the vacuum mechanism. When clamping the pulp suction die 91 and the cold extrusion die 92, the vacuum mechanisms of the pulp suction die 91 and the cold extrusion die 92 cannot be turned on simultaneously, thus the vacuum mechanism of the cold extrusion die 92 is turned off so that the pulp suction die 91 sucks the waters of the wet blank solely. Accordingly, it is impossible to discharge more waters from the wet blank when the cold extrusion die extrudes the wet blank. In addition, a clamping time of the pulp suction die 91 and the cold extrusion die 92 is increased.
4) The cold extrusion die 92 is concaved to avoid an accumulation of the waters of the paper blank on the cold extrusion die 92, yet a shape and a direction of the cold extrusion die 92 are limited.

The present invention has arisen to mitigate and/or obviate the aforedescribed disadvantages.

### SUMMARY

The primary aspect of the present invention is to provide a paper-plastic product forming apparatus which is capable of accelerating a dehydration of the paper blank and reducing a drying time, an energy consumption and a production cost.

To obtain above-mentioned aspect, a paper-plastic product forming apparatus provided by the present invention contains: a pulp suction die received in a pulp tank, the left hot-pressing upper die mounted on a left side of a longitudinal center line of the pulp suction die, a right hot-pressing upper die disposed on a right side of the longitudinal center line of the pulp suction die. The left hot-pressing upper die and the right hot-pressing upper die are moved leftward and rightward solely and are not a linkage mechanism.

In a standby state, the left hot-pressing upper die corresponds to the pulp suction die to be about to clamp or the right hot-pressing upper die corresponds to the pulp suction die to be about to clamp.

A space is defined between the left hot-pressing upper die and the right hot-pressing upper die to accommodate the left hot-pressing upper die and the right hot-pressing upper die.

Preferably, the pulp suction die is configured to suck plant fiber pulps from at least one orifice of a die by using a vacuum mechanism to produce a wet blank, the pulp suction die lifts and descends in the pulp tank; the paper-plastic product forming apparatus further contains a left hot-pressing lower die and a right hot-pressing lower die which include a heater, a vacuum mechanism, and a blower, and the left hot-pressing lower die and the right hot-pressing lower die are fixed below a left end, and a right end of a machine and are configured to lift and descend; the left hot-pressing upper die and the right hot-pressing upper die include a heater, a vacuum mechanism, and a blower; the left hot-pressing upper die and the right hot-pressing upper die are respectively fixed above the left end and the right end of the longitudinal center line of the pulp suction die and are configured to move leftward and rightward solely so as to obtain a hot-pressing forming and a die shifting; the left hot-pressing upper die is moved leftward and rightward to respectively correspond to the pulp suction die and the left hot-pressing lower die, and the right hot-pressing upper die is moved leftward and rightward to respectively correspond to the pulp suction die and the right hot-pressing lower die.

Preferably, the pulp suction die includes a mesh defined on a forming portion thereof and corresponding to a shape of a finished product; the left hot-pressing lower die and the right hot-pressing lower die include an air permeable mesh formed on a forming portion thereof and corresponding to the shape of the finished product; the left hot-pressing upper die includes an air permeable mesh formed on a forming portion thereof and corresponding to the shape of the finished product, and the right hot-pressing upper die includes an air permeable mesh formed on a forming portion thereof and corresponding to the shape of the finished product.

Preferably, a method of making a paper-plastic product by using the paper-plastic product forming apparatus contains steps of: sucking paper pulp in the pulp tank by using the pulp suction die to produce the wet pulp, moving the pulp suction die upward to be away from the pulp tank and moving the left hot-pressing upper die horizontally to locate above the space of the pulp suction die. The pulp suction die and the left hot-pressing upper die are clamped together to squeeze excess water, and after the pulp suction die and the left hot-pressing upper die are clamped together, the heater and the blower of the left hot-pressing upper die are turned on, and the vacuum mechanism of the pulp suction die is turned on to raise a temperature of the heater of the left hot-pressing upper die, thus evaporating waters from the wet blank to produce water vapors on the pulp suction die, then the water vapors and the water of the pulp suction die are blown by the blower of the left hot-pressing upper die via multiple air holes of the pulp suction die and are sucked by the vacuum mechanism of the pulp suction die so as to reduce the water of the wet blank greatly, thus producing a paper blank, thereafter the blower of the left hot-pressing upper die is stopped and the vacuum mechanism of the left hot-pressing upper die is turned on to suck the paper blank into the left hot-pressing upper die, in the meantime, the left hot-pressing upper die is moved to locate above the left hot-pressing lower die, and the left hot-pressing lower die is lifted upward to clamp with the left hot-pressing upper die, then the paper blank is heated and dried completely by the heaters of the left hot-pressing upper die and the left hot-pressing lower die to produce a finished product.

Preferably, the paper-plastic product forming apparatus further contains a left collection mechanism arranged on a left side of the paper-plastic product forming apparatus. The paper-plastic product forming apparatus contains a right collection mechanism arranged on a right side thereof. The left collection mechanism and the right collection mechanism are configured to suck the finished product which is dried; the left collection mechanism and the right collection mechanism are locked on the paper-plastic product forming apparatus directly. The left collection mechanism and the right collection mechanism have two axes or three axes.

Preferably, the paper-plastic product forming apparatus further contains a left collection mechanism and a right collection mechanism which are configured to suck the finished product which is dried, the left collection mechanism and the right collection mechanism are fixed beside the left side and the right side of the paper-plastic product forming apparatus respectively, and the left collection mechanism and the right collection mechanism have two axes or three axes.

Thereby, the paper-plastic product forming apparatus is configured to reduce the waters of the paper blank, a dried time, the energy consumption, and the production cost. The paper-plastic product forming apparatus contains the pulp suction die received in the pulp tank, the left hot-pressing upper die mounted on the left side of the longitudinal center line of the pulp suction die, the right hot-pressing upper die disposed on the right side of the longitudinal center line of the pulp suction die. The left hot-pressing upper die and the right hot-pressing upper die are moved solely and are not a linkage mechanisms. In a standby state, the left hot-pressing upper die corresponds to the pulp suction die to be about to clamp the wet blank or the right hot-pressing upper die corresponds to the pulp suction die to be about to clamp the wet blank. The space is defined between the left hot-pressing upper die and the right hot-pressing upper die to accommodate the left hot-pressing upper die and the right hot-pressing upper die. Preferably, the paper-plastic product forming apparatus eliminates one cold extrusion die from the conventional cold extrusion process, which means that a cold extrusion base and a cold extrusion die are reduced, and a size of the machine is decreased, thus saving floor space and the production cost.

### BRIEF DESCRIPTION OF THE DRAWINGS

FIG. 1 is a schematic view showing the assembly of a paper-plastic product forming apparatus according to a preferred embodiment of the present invention.
FIG. 2 is a schematic view showing the step of forming a paper-plastic product by using the paper-plastic product forming apparatus according to the preferred embodiment of the present invention.
FIG. 3 is another schematic view showing the step of forming the paper-plastic product by using the paper-plastic product forming apparatus according to the preferred embodiment of the present invention.
FIG. 4 is also another schematic view showing the step of forming the paper-plastic product by using the paper-plastic product forming apparatus according to the preferred embodiment of the present invention.
FIG. 5 is still another schematic view showing the step of forming the paper-plastic product by using the paper-plastic product forming apparatus according to the preferred embodiment of the present invention.
FIG. 6 is another schematic view showing the step of forming the paper-plastic product by using the paper-plastic product forming apparatus according to the preferred embodiment of the present invention.
FIG. 7 is also another schematic view showing the step of forming the paper-plastic product by using the paper-plastic product forming apparatus according to the preferred embodiment of the present invention.
FIG. 8 is still another schematic view showing the step of forming the paper-plastic product by using the paper-plastic product forming apparatus according to the preferred embodiment of the present invention.
FIG. 9 is a cross sectional view showing the operation of the paper-plastic product forming apparatus according to the preferred embodiment of the present invention.
FIG. 10 is a schematic view showing the application of the paper-plastic product forming apparatus according to the preferred embodiment of the present invention.
FIG. 11 is a schematic view of a conventional paper-plastic product forming apparatus.
FIG. 12 is another schematic view of the conventional paper-plastic product forming apparatus.

### REFERENCE NUMERAL

| | | | |
|---|---|---|---|
| 1 | pulp suction die | 10 | orifice |
| 11 | mesh | 12 | space |
| 2 | pulp tank | 3 | left hot-pressing lower die |
| 4 | right hot-pressing lower die | 5 | left hot-pressing upper die |
| 6 | right hot-pressing upper die | 51, 61 | air permeable mesh |
| 7, 71 | left collection mechanism | 8, 81 | right collection mechanism |
| A | wet blank | B | paper blank |
| C | finished product | V | longitudinal center line |
| 9 | paper-plastic product forming apparatus | | |
| 91 | pulp suction die | 92 | cold extrusion die |
| 93, 9 | hot-pressing upper die | 95,96 | hot-pressing lower die |

### DETAILED DESCRIPTION

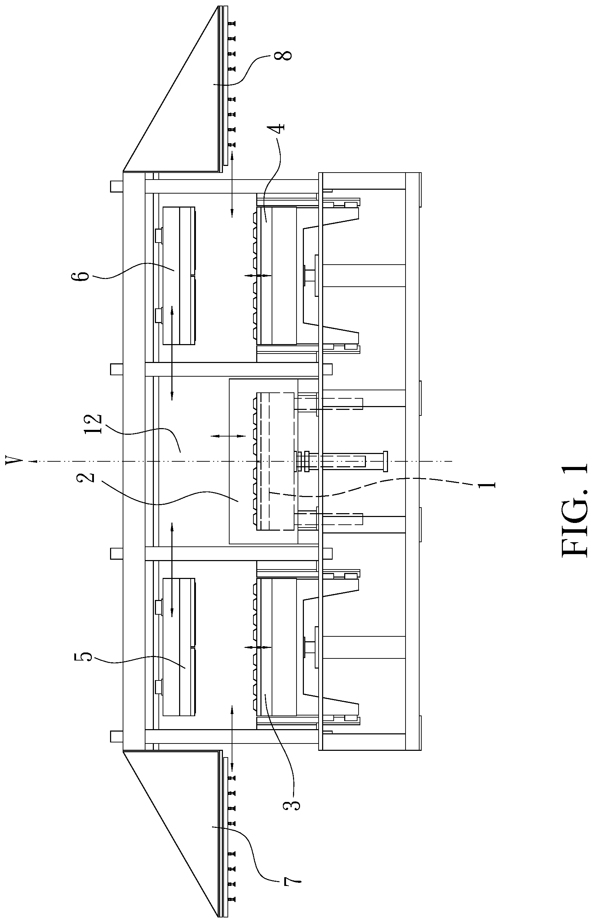

With reference to FIG. 1, a paper-plastic product forming apparatus according to a preferred embodiment of the present invention comprises: a pulp suction die 1 configured to suck plant fiber pulps from at least one orifice 10 of a die by using a vacuum mechanism to produce a wet blank A, wherein the pulp suction die 1 includes a mesh 11 defined on a forming portion thereof and corresponding to a shape of a finished product, wherein the pulp suction die 1 lifts and descends in a pulp tank 2, and a space 12 is defined on a longitudinal center line V on which the pulp suction die 1 is located.

A left hot-pressing lower die 3 and a right hot-pressing lower die 4 include a heater, a vacuum mechanism, and a blower, and the left hot-pressing lower die 3 and the right hot-pressing lower die 4 include an air permeable mesh formed on a forming portion thereof and corresponding to the shape of the finished product, wherein the left hot-pressing lower die 3 and the right hot-pressing lower die 4 are fixed below a left end and a right end of a machine and are configured to lift and descend.

A left hot-pressing upper die 5 and a right hot-pressing upper die 6 include a heater, a vacuum mechanism, and a blower, and the left hot-pressing upper die 5 includes an air permeable mesh 51 formed on a forming portion thereof and corresponding to the shape of the finished product, the right hot-pressing upper die 6 includes an air permeable mesh 61 formed on a forming portion thereof and corresponding to the shape of the finished product, wherein the left hot-pressing upper die 5 and the right hot-pressing upper die 6 are configured to move leftward and rightward solely, the left hot-pressing upper die 5 and the right hot-pressing upper die 6 are respectively fixed above a left end and a right end of a longitudinal center line of the pulp suction die 1 and are configured to move leftward and rightward solely so as to obtain a hot-pressing forming and a die shifting, wherein the left hot-pressing upper die 5 is moved leftward and rightward to respectively correspond to the pulp suction die 1 and the left hot-pressing lower die 3, and the right hot-pressing upper die 6 is moved leftward and rightward to respectively correspond to the pulp suction die 1 and the right hot-pressing lower die 4, when the left hot-pressing upper die 5 and the pulp suction die 1 are not started in a standby state to have a die closing operation or the right hot-pressing upper die 6 and the pulp suction die 1 are not started in the standby state to have a die closing operation, the space 12 exists between the left hot-pressing upper die 5 and the right hot-pressing upper die 6 and is defined on the longitudinal center line V on which the pulp suction die 1 is located to accommodate the left hot-pressing upper die 5 and the right hot-pressing upper die 6.

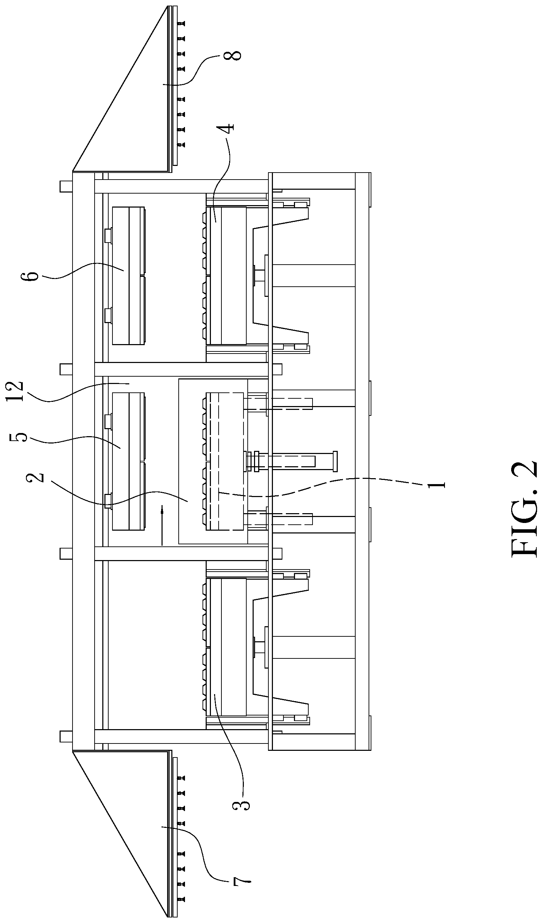

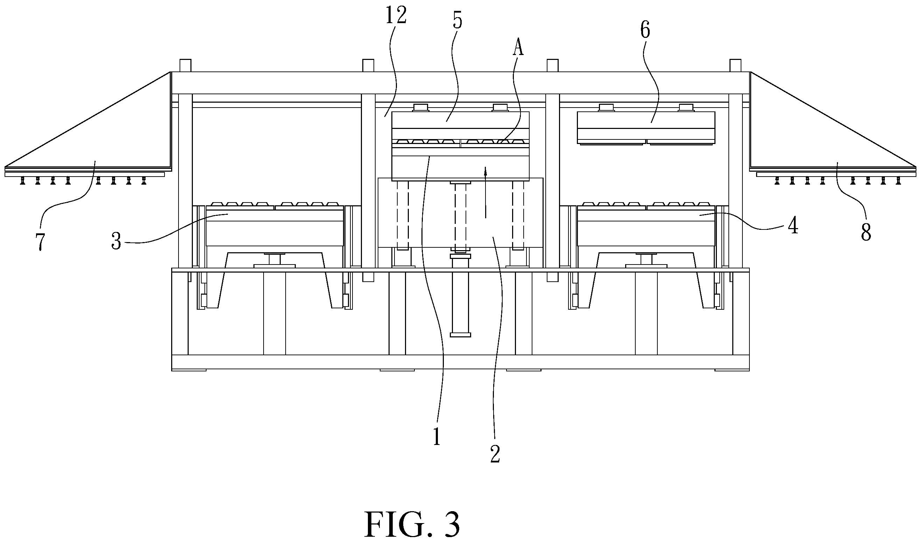

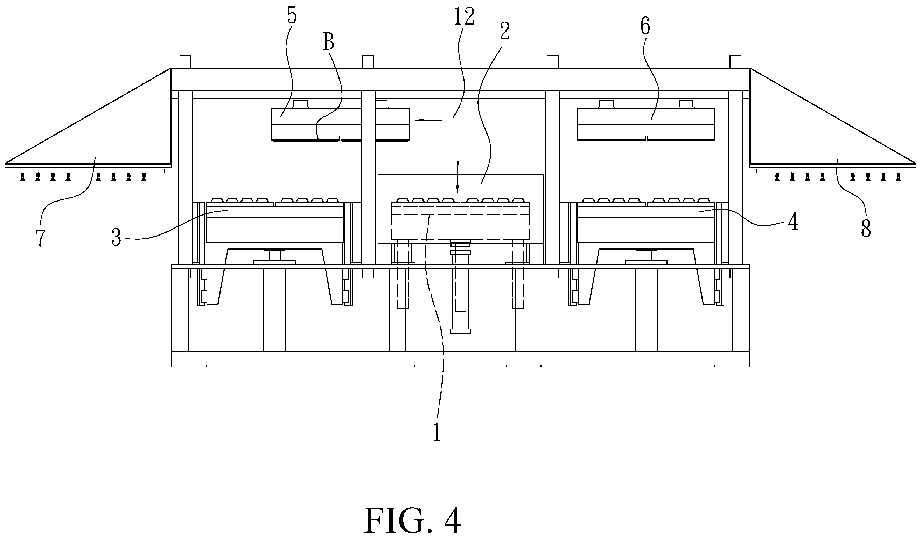

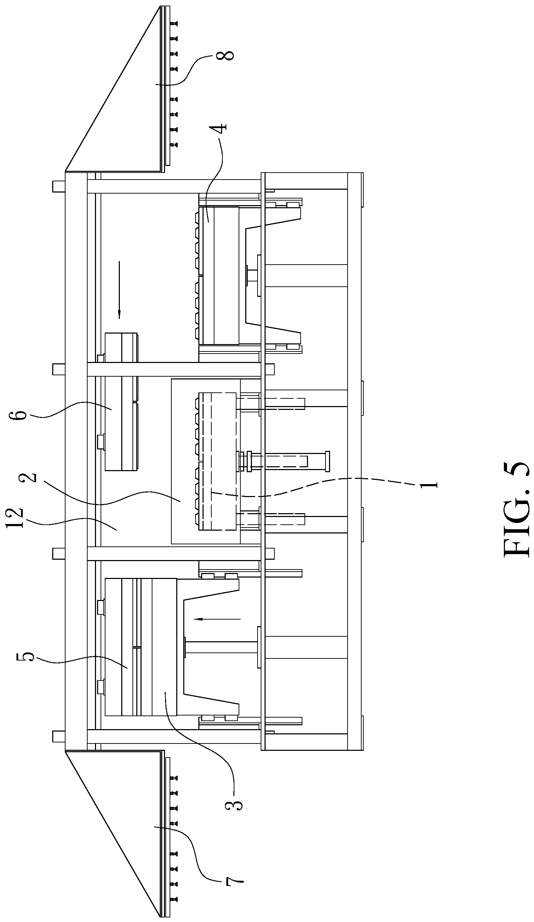

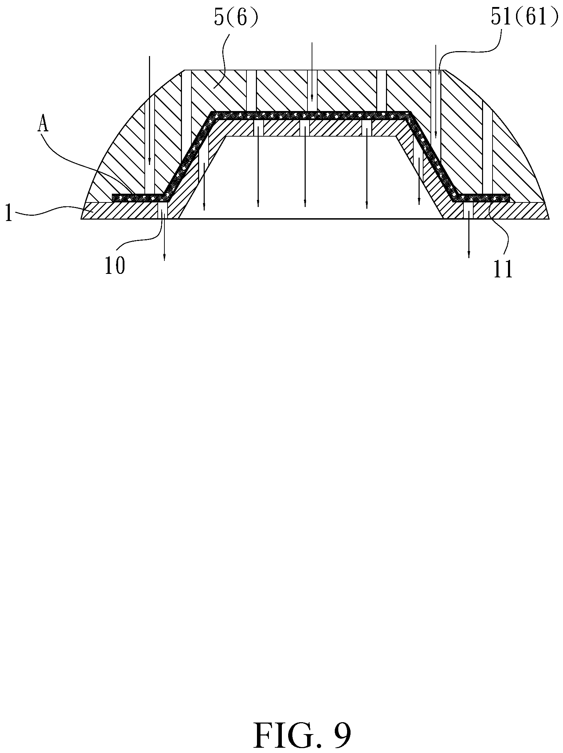

Referring to FIGS. 1-9, a method of making a paper-plastic product by using the paper-plastic product forming apparatus according to a preferred embodiment of the present invention comprises steps of: sucking paper pulp in the pulp tank 2 by using the pulp suction die 1 to produce the wet pulp A, moving the pulp suction die 1 upward to be away from the pulp tank 2 and moving the left hot-pressing upper die 5 horizontally to locate above the space 12 of the pulp suction die 1, as shown in FIG. 2, wherein the pulp suction die 1 and the left hot-pressing upper die 5 are clamped together (as illustrated in FIG. 3) to squeeze excess water, and after the pulp suction die 1 and the left hot-pressing upper die 5 are clamped together, the heater and the blower of the left hot-pressing upper die 5 are turned on, and the vacuum mechanism of the pulp suction die 1 is turned on so as to raise a temperature of the heater of the left hot-pressing upper die 5, thus evaporating waters from the wet blank A to produce water vapors on the pulp suction die 1. Then, the water vapors and the water of the pulp suction die 1 are blown by the blower of the left hot-pressing upper die 5 via multiple air holes of the pulp suction die 1 and are sucked by the vacuum mechanism of the pulp suction die 1 (as shown in FIG. 9) so as to reduce the water of the wet blank A greatly, thus producing a paper blank B. Thereafter, the blower of the left hot-pressing upper die 5 is stopped and the vacuum mechanism of the left hot-pressing upper die 5 is turned on to suck the paper blank B into the left hot-pressing upper die 5, in the meantime, the left hot-pressing upper die 5 is moved to locate above the left hot-pressing lower die 3 (as illustrated in FIG. 4), and the left hot-pressing lower die 3 is lifted upward to clamp with the left hot-pressing upper die 5 (as shown in FIG. 5), then the paper blank B is heated and dried completely by the heaters of the left hot-pressing upper die 5 and the left hot-pressing lower die 3 to produce the finished product C.

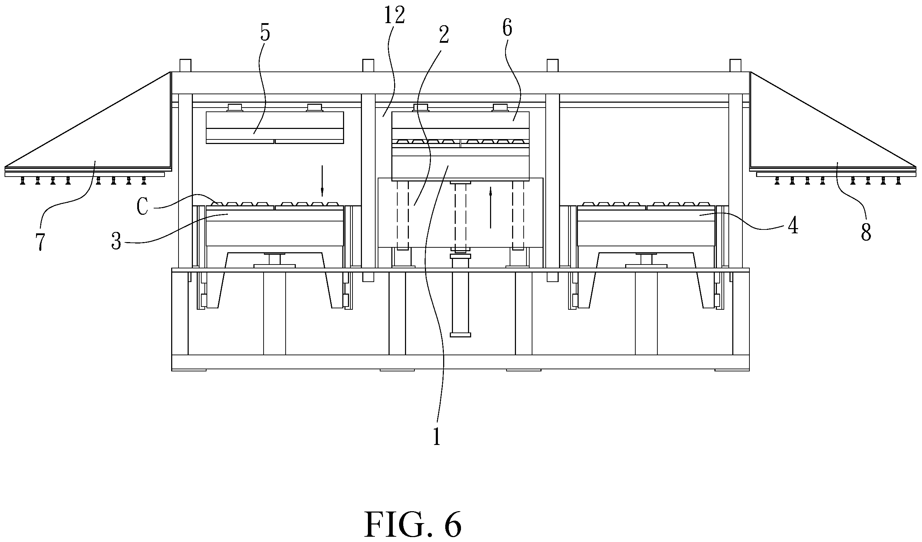

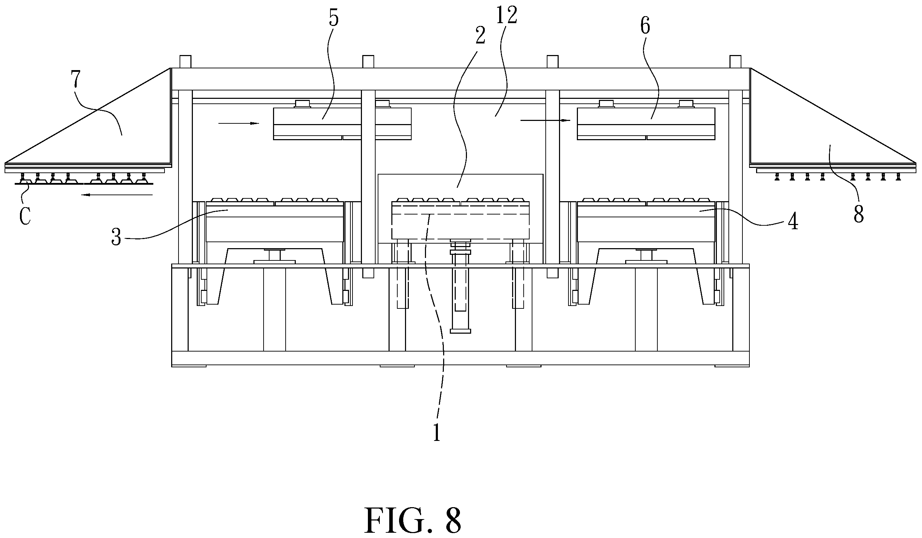

With reference to FIG. 4, the vacuum mechanism of the left hot-pressing upper die 5 is turned on to suck the paper blank B into the left hot-pressing upper die 5, and the left hot-pressing upper die 5 sucks the paper blank B and is moved to locate above the left hot-pressing lower die 3, then the pulp suction die 1 descends into the pulp tank 2 to suck a next wet blank A. In the meantime, as shown in FIG. 5, the right hot-pressing upper die 6 is moved horizontally to locate above the space 12, and the pulp suction die 1 and the right hot-pressing upper die 6 are clamped together (as shown in FIG. 6) to squeeze excess waters from the next wet blank A. Thereafter, the heater and the blower of the right hot-pressing upper die 6 are turned on, and the vacuum mechanism of the pulp suction die 1 is turned on to raise the temperature of the right hot-pressing upper die 6, thus evaporating waters from the next wet blank A to produce water vapors on the pulp suction die 1. Then, the water vapors and the water of the next wet blank A are blown by the blower of the right hot-pressing upper die 6 via the multiple air holes of the pulp suction die 1 and are sucked by the vacuum mechanism of the pulp suction die 1 so as to reduce the water of the next wet blank A greatly, thus producing a next paper blank B. Thereafter, the blower of the right hot-pressing upper die 6 is stopped and the vacuum mechanism of the right hot-pressing upper die 6 is turned on to suck the next paper blank B into the right hot-pressing upper die 6, in the meantime, the right hot-pressing upper die 6 is moved to locate above the right hot-pressing lower die 4 (as illustrated in FIG. 8), and the right hot-pressing lower die 4 is lifted upward to clamp with the right hot-pressing upper die 6, then the next paper blank B is heated and dried completely by the heaters of the right hot-pressing upper die 4 to produce another finished product C. Since the left hot-pressing upper die 5 and the right hot-pressing upper die 6 are moved solely, operations of the other left hot-pressing upper die 5 and the other right hot-pressing upper die 6 on a right side of the machine are identical, so the left hot-pressing upper dies 5 and the right hot-pressing upper dies 6 move the wet blanks A repeatedly.

When the paper-plastic product forming apparatus beside a left side of the machine operates, the left hot-pressing upper dies 5 and the left hot-pressing lower dies 3 are heated to suck the wet blank A, the waters in the wet blank A are evaporated to form the water vapors quickly, then the blower of the left hot-pressing upper dies 5 is turned on to blow airs and the vacuum mechanism of the pulp suction die 1 is turned on simultaneously to vacuum and suck the water vapors and the excess water in the wet blank A. Preferably, the meshes of the pulp suction die 1 and the left hot-pressing upper dies 5 blow or suck the waters easily to prevent a limitation of the shape of the finished product. In other words, the waters in the wet blank A are discharged by hot exhaust airs to produce the paper blank B with 55% of the waters of the wet blank A in a short time. According to a relationship between drying and energy consumption, it is known that when the paper blank B becomes the finished product C, drying 1% of waters requires 5% of energy consumption is achieved. Since a heating and setting time is directly proportional to the waters, the more waters in the wet blank A are, the longer the heating and setting time is. Through the preheating extrusion drying and dehydration of the present invention, the waters in the wet blank A are blown and evaporated by the hot air of the left hot-pressing upper dies 5 so that the outer surface and the inner surface of the wet blank A cannot only connect with the waters but also the remained waters and the water vapors are vacuumed by the vacuum mechanism of the pulp suction die 1, thus saving an energy consumption and a time of subsequent hot-pressing and shaping. Furthermore, the present invention eliminates one cold extrusion die from the conventional cold extrusion process, which means that a cold extrusion base and a cold extrusion die are reduced, and a size of the machine is decreased, thus saving a floor space and a production cost.

The pulp suction die 1, the left hot-pressing upper die 5 and the right hot-pressing upper die 6 include the meshes 11, 51, 61 respectively formed on the forming portions thereof and corresponding to the shape of the finished product, so the forming direction is not limited in a concave-convex shape or any shapes, and there is no need to worry about being stopped in a vacuum absorbing operation. In other words, the paper-plastic product is formed in any shapes and in any directions. The greatest advantage of the present invention is that the high-temperature air of hot pressing is used to cause the water on the surface of or inside the wet blank A to flow and evaporate. The paper blank B with reduced water achieves a more stable yield in a hot-pressing and forming process, thus increasing a production capacity and reducing a defective rate.

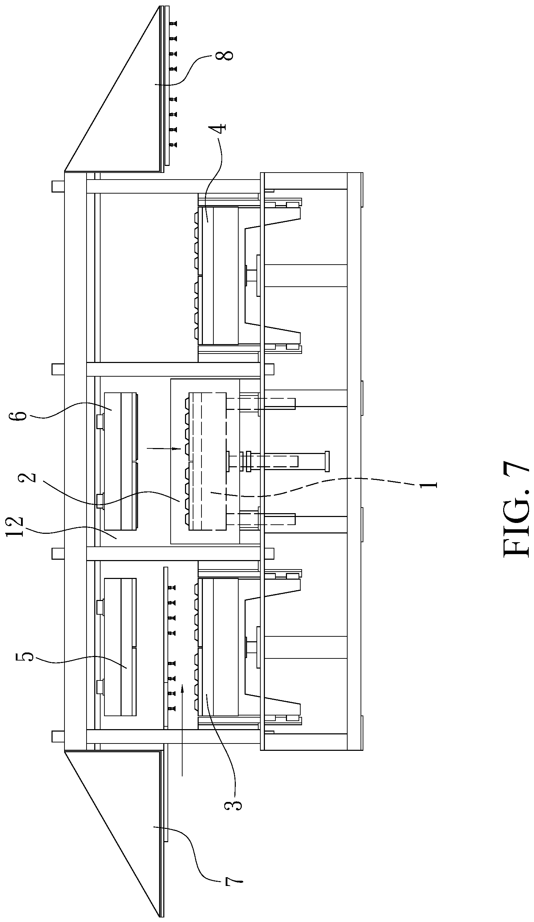

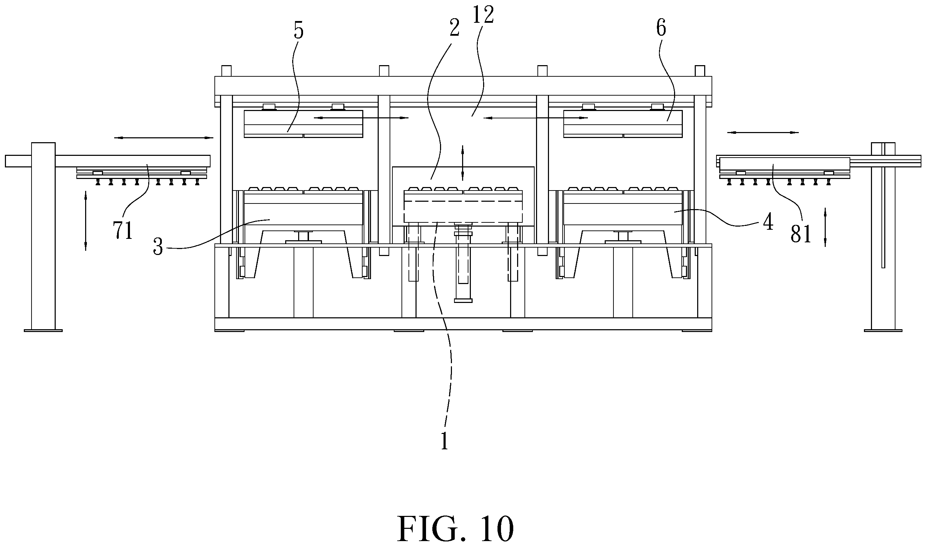

The paper-plastic product forming apparatus includes a left collection mechanism 7 arranged on a left side thereof, and the paper-plastic product forming apparatus includes a right collection mechanism arranged on a right side thereof, wherein the left collection mechanism 7 and the right collection mechanism 8 are configured to suck the finished product C which is dried, as shown in FIG. 7. In another embodiment, the left collection mechanism 7 and the right collection mechanism 8 are locked on the paper-plastic product forming apparatus directly, as illustrated in FIG. 10. In addition, the left collection mechanism 7 and the right collection mechanism 8 are fixed beside the left side and the right side of the paper-plastic product forming apparatus respectively, as shown in FIG. 10, wherein the left collection mechanism 7 and the right collection mechanism 8 have two axes or three axes.

Thereby, the paper-plastic product forming apparatus is configured to reduce the waters of the paper blank B, a dried time, the energy consumption, and the production cost. The paper-plastic product forming apparatus comprises the pulp suction die 1 received in the pulp tank 2, the left hot-pressing upper die 5 mounted on the left side of the longitudinal center line V of the pulp suction die 1, the right hot-pressing upper die 6 disposed on the right side of the longitudinal center line V of the pulp suction die 1, wherein the left hot-pressing upper die 5 and the right hot-pressing upper die 6 are moved solely and are not the linkage mechanisms. In a standby state, the left hot-pressing upper die 5 corresponds to the pulp suction die 1 to be about to clamp the wet blank A or the right hot-pressing upper die 6 corresponds to the pulp suction die 1 to be about to clamp the wet blank A. The space 12 is defined between the left hot-pressing upper die 5 and the right hot-pressing upper die 6 to accommodate the left hot-pressing upper die 5 and the right hot-pressing upper die 6. Preferably, the paper-plastic product forming apparatus eliminates one cold extrusion die from the conventional cold extrusion process, which means that a cold extrusion base and a cold extrusion die are reduced, and a size of the machine is decreased, thus saving the floor space and the production cost.

## Claims

1. A paper-plastic product forming apparatus comprising:
a pulp suction die (1) received in a pulp tank (2), the left hot-pressing upper die (5) mounted on a left side of a longitudinal center line (V) of the pulp suction die (1), a right hot-pressing upper die (6) disposed on a right side of the longitudinal center line (V) of the pulp suction die (1), wherein the left hot-pressing upper die (5) and the right hot-pressing upper die (6) are moved leftward and rightward solely and are not a linkage mechanisms;
**characterized in that** in a standby state, the left hot-pressing upper die (5) corresponds to the pulp suction die (1) to be about to clamp or the right hot-pressing upper die (6) corresponds to the pulp suction die (1) to be about to clamp; and
wherein a space (12) is defined between the left hot-pressing upper die (5) and the right hot-pressing upper die (6) to accommodate the left hot-pressing upper die (5) and the right hot-pressing upper die (6).

2. The paper-plastic product forming apparatus as claimed in claim 1, **characterized in that** the pulp suction die (1) is configured to suck plant fiber pulps from at least one orifice of a die by using a vacuum mechanism to produce a wet blank (A), wherein the pulp suction die (1) lifts and descends in the pulp tank (2); the paper-plastic product forming apparatus further comprises a left hot-pressing lower die (3) and a right hot-pressing lower die (4) which include a heater, a vacuum mechanism, and a blower, and the left hot-pressing lower die (3) and the right hot-pressing lower die (4) are fixed below a left end and a right end of a machine and are configured to lift and descend; the left hot-pressing upper die (5) and the right hot-pressing upper die (6) include a heater, a vacuum mechanism, and a blower; the left hot-pressing upper die (5) and the right hot-pressing upper die (6) are respectively fixed above the left end and the right end of the longitudinal center line of the pulp suction die (1) and are configured to move leftward and rightward solely so as to obtain a hot-pressing forming and a die shifting; wherein the left hot-pressing upper die (5) is moved leftward and rightward to respectively correspond to the pulp suction die (1) and the left hot-pressing lower die (3), and the right hot-pressing upper die (6) is moved leftward and rightward to respectively correspond to the pulp suction die (1) and the right hot-pressing lower die (4).

3. The paper-plastic product forming apparatus as claimed in claim 2, **characterized in that** the pulp suction die (1) includes a mesh (11) defined on a forming portion thereof and corresponding to a shape of a finished product; the left hot-pressing lower die (3) and the right hot-pressing lower die (4) include an air permeable mesh formed on a forming portion thereof and corresponding to the shape of the finished product; the left hot-pressing upper die (5) includes an air permeable mesh (51) formed on a forming portion thereof and corresponding to the shape of the finished product, and the right hot-pressing upper die (6) includes an air permeable mesh (61) formed on a forming portion thereof and corresponding to the shape of the finished product.

4. The paper-plastic product forming apparatus as claimed in claim 2, **characterized in that** a method of making a paper-plastic product by using the paper-plastic product forming apparatus comprises steps of: sucking paper pulp in the pulp tank (2) by using the pulp suction die (1) to produce the wet pulp (A), moving the pulp suction die (1) upward to be away from the pulp tank (2) and moving the left hot-pressing upper die (5) horizontally to locate above the space (12) of the pulp suction die (1), wherein the pulp suction die (1) and the left hot-pressing upper die (5) are clamped together to squeeze excess water, and after the pulp suction die (1) and the left hot-pressing upper die (5) are clamped together, the heater and the blower of the left hot-pressing upper die (5) are turned on, and the vacuum mechanism of the pulp suction die (1) is turned on to raise a temperature of the heater of the left hot-pressing upper die (5), thus evaporating waters from the wet blank (A) to produce water vapors on the pulp suction die (1), then the water vapors and the water of the pulp suction die (1) are blown by the blower of the left hot-pressing upper die (5) via multiple air holes of the pulp suction die (1) and are sucked by the vacuum mechanism of the pulp suction die (1) so as to reduce the water of the wet blank (A) greatly, thus producing a paper blank (B), thereafter the blower of the left hot-pressing upper die (5) is stopped and the vacuum mechanism of the left hot-pressing upper die (5) is turned on to suck the paper blank (B) into the left hot-pressing upper die (5), in the meantime, the left hot-pressing upper die (5) is moved to locate above the left hot-pressing lower die (3), and the left hot-pressing lower die (3) is lifted upward to clamp with the left hot-pressing upper die (5), then the paper blank (B) is heated and dried completely by the heaters of the left hot-pressing upper die (5) and the left hot-pressing lower die (3) to produce a finished product (C).

5. The paper-plastic product forming apparatus as claimed in claim further comprising a left collection mechanism (7) arranged on a left side of the paper-plastic product forming apparatus, **characterized in that** the paper-plastic product forming apparatus comprises a right collection mechanism (8) arranged on a right side thereof, wherein the left collection mechanism (7) and the right collection mechanism (8) are configured to suck the finished product (C) which is dried; the left collection mechanism (7) and the right collection mechanism (8) are locked on the paper-plastic product forming apparatus directly, wherein the left collection mechanism (7) and the right collection mechanism (8) have two axes or three axes.

6. The paper-plastic product forming apparatus as claimed in claim 2 further comprising a left collection mechanism (7) and a right collection mechanism (8) which are configured to suck the finished product (C) which is dried, **characterized in that** the left collection mechanism (7) and the right collection mechanism (8) are fixed beside the left side and the right side of the paper-plastic product forming apparatus respectively, and the left collection mechanism (7) and the right collection mechanism (8) have two axes or three axes.
